Europäisches Patentamt

European Patent Office

Office européen des brevets

(19)

(11)  EP 0 593 029 B1

(12)  EUROPÄISCHE PATENTSCHRIFT

(45) Veröffentlichungstag und Bekanntmachung des Hinweises auf die Patenterteilung:
08.01.1997  Patentblatt 1997/02

(51) Int. Cl.$^6$: **C04B 35/58**

(21) Anmeldenummer: 93116551.8

(22) Anmeldetag: 13.10.1993

(54) **Verfahren zur Herstellung homogener Siliciumnitridsinterkörper mit hoher Dichte**

Method of making a homogeneous silicon nitride sintered body having a high density

Procédé de fabrication d'un corps homogène en nitrure de silicium ayant une densité élevée

(84) Benannte Vertragsstaaten:
**DE FR GB**

(30) Priorität: **15.10.1992 DE 4234794**

(43) Veröffentlichungstag der Anmeldung:
**20.04.1994  Patentblatt 1994/16**

(73) Patentinhaber:
 • **HOECHST AKTIENGESELLSCHAFT**
  **65929 Frankfurt am Main (DE)**
  Benannte Vertragsstaaten:
  **DE FR GB**
 • **Frauenhofer-Gesellschaft zur Förderung der angewandten Forschung e.V.**
  **D-80636 München (DE)**
  Benannte Vertragsstaaten:
  **DE**

(72) Erfinder:
 • **Boberski, Cornelia, Dr.**
  **D-65835 Liederbach (DE)**
 • **Riedel, Günter, Dr.**
  **D-65779 Kelkheim (Taunus) (DE)**
 • **Hamminger, Rainer, Dr.**
  **D-68199 Mannheim (DE)**
 • **Hermann, Mathias, Dr.**
  **D-01662 Meissen (DE)**
 • **Schubert, Christian, Dr.**
  **D-01326 Dresden (DE)**
 • **Putzky, Gerhard**
  **D-01157 Dresden (DE)**

(56) Entgegenhaltungen:
**US-A- 4 379 110**          **US-A- 5 114 888**

 • **CHEMICAL ABSTRACTS, vol. 100, no. 20, 14. Mai 1984, Columbus, Ohio, US; abstract no. 160968, 'Silicon nitride sinters with high density and strength'**

**Beschreibung**

Siliciumnitrid, $Si_3N_4$, ist aufgrund seiner hervorragenden Eigenschaften - hohe mechanische Festigkeit, Härte, Korrosions-, Thermoschock- und Oxidationsbeständigkeit - ein wichtiger Werkstoff für immer zahlreicher werdende Anwendungen im Maschinenbau.

Hochleistungswerkstoffe und entsprechende Bauteile aus $Si_3N_4$-Keramik werden nach einer keramischen Fertigungstechnologie durch Mischen hochwertiger Siliziumnitridpulver mit Sinteradditiven, meist Naßmischung und Dispergierung in organischen Dispersionsmedien oder in Wasser, nachfolgende Trocknung, Formgebung und Sinterung hergestellt.

Bei der Sinterung selbst muß der bei der Dichtsintertemperatur unter Atmosphärendruck stattfindenden Zersetzung des $Si_3N_4$ durch Anhebung des $N_2$-Partialdruckes entgegengewirkt werden. Aus der EP-A-0 079 678 ist für die Dichtsinterung von $Si_3N_4$-Werkstoffen mit oxidischen Sinteradditiven ein zwei- oder dreistufiger Druckzyklus bekannt. Dabei soll der Druck möglichst niedrig sein, solange innerhalb des zu sinternden Materials noch offene Porosität vorliegt, wobei eine Druckerhöhung auf Werte von mehr als 0,5 MPa erst dann erfolgt, wenn die Sinterverdichtung mindestens bis zu 90 % der theoretisch erreichbaren Maximaldichte fortgeschritten ist. Dieses Verfahren führt meist dazu, daß die Sinterkörper unterschiedliche Färbungen von Rand und Kernzonen aufweisen, die nicht nur optisch stören, sondern auch unmittelbar die Werkstoffeigenschaften beeinflussen. Vor allem wird dieser Effekt bei chemisch sehr reinen Werkstoffen beobachtet, die hauptsächlich für Hochleistungswerkstoffe verwendet werden müssen.

Chemical Abstracts, Band 100, Zusammenfassung Nr. 160968 und JP-A-59018165 sowie US-A-5114888 und US-A-4379110 lehren Zweistufensinterverfahren, bei denen sowohl der Druck, als auch die Temperatur in jeder der beiden Stufen konstant gehalten werden.

Der Erfindung lag die Aufgabe zugrunde, ein Verfahren anzugeben, mit dem sich Bauteile auf Basis $Si_3N_4$ für den Einsatz im Motorenbau, beispielsweise für Gasturbinenteile, Ventile u.ä. herstellen lassen, die über ihr ganzes Volumen homogen verdichtet sind und keine Randzonenverfärbung aufweisen.

Diese Aufgabe wurde durch ein Verfahren zum Drucksintern von Siliziumnitrid gelöst, bei dem Siliziumnitridpulver mit Sinteradditiven vermischt, zu Bauteilen verformt und dann nach einem Zweistufensinterprogramm dichtgesintert werden, wobei die Druckerhöhung des Stickstoffdruckes bei einer Dichte von > 95% der theoretisch erreichbaren Maximaldichte ($D_{th}$) auf einen Maximaldruck im Bereich von 1,7 bis 100 MPa erfolgt, dessen Kennzeichenmerkmal darin zu sehen ist, daß der Stickstoffdruck zum Zeitpunkt des Erreichens von 85% von $D_{th}$ im Bereich von 0,1 bis 0,3 des Maximaldruckes und zum Zeitpunkt des Erreichens von 93% von $D_{th}$ im Bereich von 0,2 bis 0,4 des Maximaldruckes eingestellt wird, wobei der Druck ab einer Temperatur von 1110 oder 1550 °C kontinuierlich bis zum Erreichen der isothermen Haltezeit erhöht wird.

Erfindungsgemäß geeignete Sinteradditive umfassen Oxide von Metallen wie Lithium, Magnesium, Aluminium, Kalzium, Yttrium, Strontium, Barium, Lanthan und den Lanthaniden, wobei Aluminium und Yttrium besonders bevorzugt sind.

Im Rahmen der vorliegenden Erfindung haben sich als Gase für die Druckerhöhung bis zum Erreichen einer Dichte von 93% von $D_{th}$ insbesondere Stickstoff, Mischungen aus Stickstoff und Wasserstoff, Mischungen aus Stickstoff und Kohlenmonoxid oder Mischungen aus Stickstoff, Wasserstoff und Kohlenmonoxid als besonders geeignet erwiesen. Als Gas für die Druckerhöhung nach dem Erreichen einer Dichte von 95% von $D_{th}$ wird vorzugsweise Stickstoff, Argon oder eine Mischung von diesen verwendet.

Die aktuelle Dichte der Bauteile innerhalb des Drucksinterofens, die für die Einstellung des jeweiligen Stickstoffdruckes als Bezugsgröße eingehalten werden muß, läßt sich durch einen dem Drucksinterofen zugeschalteten Prozeßdilatometer ermitteln. Dabei muß gewährleistet sein, daß die Anordnung des Dilatometers so ist, daß die Schwindungswerte die reale Schwindung der Proben widerspiegeln. Hierzu müssen die Abdampfverluste während des Aufheizens < 1 % sein, andernfalls muß in Vorversuchen zur Drucksinterung eine Eichung erfolgen. Die Berechnung des Wertes der Schwindung in % von $D_{th}$ erfolgt nach folgender Formel:

$$[\Delta_l/L_o]_x = 100 - 100 \cdot \sqrt[3]{\frac{D_g}{0,01 \cdot x \cdot D_{th}}}$$

mit

$[\Delta_l/L_o]_x$ = Lineare Schwindung bis zum Erreichen von x der theoretischen Dichte,
$D_g$ = Ausgangsdichte der Sinterproben
$D_{th}$ = theoretisch erreichbare Maximaldichte
x = % der theoretisch erreichbaren Maximaldichte, die aktuell erreicht werden sollen.

Beispiele 1 bis 3 (Stand der Technik)

Formkörper aus $Si_3N_4$-Pulver und verschiedenen Gehalten an Sinteradditiven $Y_2O_3$ und $Al_2O_3$ mit der Abmessung $30 \cdot 30 \cdot 60$ mm$^3$ wurden in einem Drucksinterofen nach folgendem Programm gesintert:

Temperaturprogramm: Aufheizgeschwindigkeit 20 K/min bis 1800°C,
isotherme Haltezeit 1,5 h,
Abkühlgeschwindigkeit 20 K/min.
Druckprogramm: bis 1200°C Vakuum,
von 1200°C bis 1800°C 0,3 MPa Stickstoffdruck,
bei 1800°C Druckerhöhung auf 5,0 MPa innerhalb von 10 min und Konstanthalten bis zur Abkühlung.

Die Porosität der so erhaltenen Proben in gesintertem Zustand war < 0,5 %. Die Ergebnisse sind in der nachfolgenden Tabelle dargestellt.

Tabelle 1

| Zusammensetzung der Proben und Ergebnisse der Drucksinterung (Beispiel 1-3) | | | | | | | | | |
|---|---|---|---|---|---|---|---|---|---|
| Beis. Nr. | Zusammensetzung | | | Aus-gangsdichte g/cm$^3$ | Temperatur bei der | | Druck bei | | Farbe | |
| | $Si_3N_4$ | $Y_2O_3$ % | $Al_2O_3$ | | 85% | 93% | 85% | 93%$D_{th}$ | Kern | Randzone |
| | | | | | $D_{th}$ erreicht wurden | | MPa | MPa | | |
| | | | | | °C | °C | | | | |
| 1 | 87,75 | 10 | 2,25 | 1,83 | 1730 | 1765 | 0,3 | 0,3 | dunkel | hellgelb |
| 2 | 92 | 5 | 3 | 1,61 | 1753 | 1790 | 0,3 | 0,3 | schwarz | hellgrau |
| 3 | 93 | 5 | 2 | 1,61 | 1755 | 1800 | 0,3 | 1,3 | schwarz | hellgrau |

Beispiel 4:

Ein Formkörper aus $Si_3N_4$-Pulver enthaltend 10 % $Y_2O_3$ und 2,3 % $Al_2O_3$ als Sinteradditive wurde mit der Abmessung $30 \cdot 30 \cdot 60$ mm$^3$ hergestellt und im Drucksinterofen nach folgendem Programm gesintert:

Temperaturprogramm: Aufheizgeschwindigkeit 30 K/min bis 1800°C
isotherme Haltezeit 1,5 h
Abkühlung 20 K/min
Druckprogramm: bis 1200°C Vakuum,
von 1200°C bis zum Erreichen von 1550°C:
0,3 MPa Stickstoffdruck,
ab 1550°C wird der Stickstoffdruck innerhalb von 10 min auf 2,0 MPa erhöht. Anschließend erfolgt der weitere Druckaufbau bis auf 5,0 MPa.
Dieser Druck wird bis zur Abkühlung konstant gehalten.

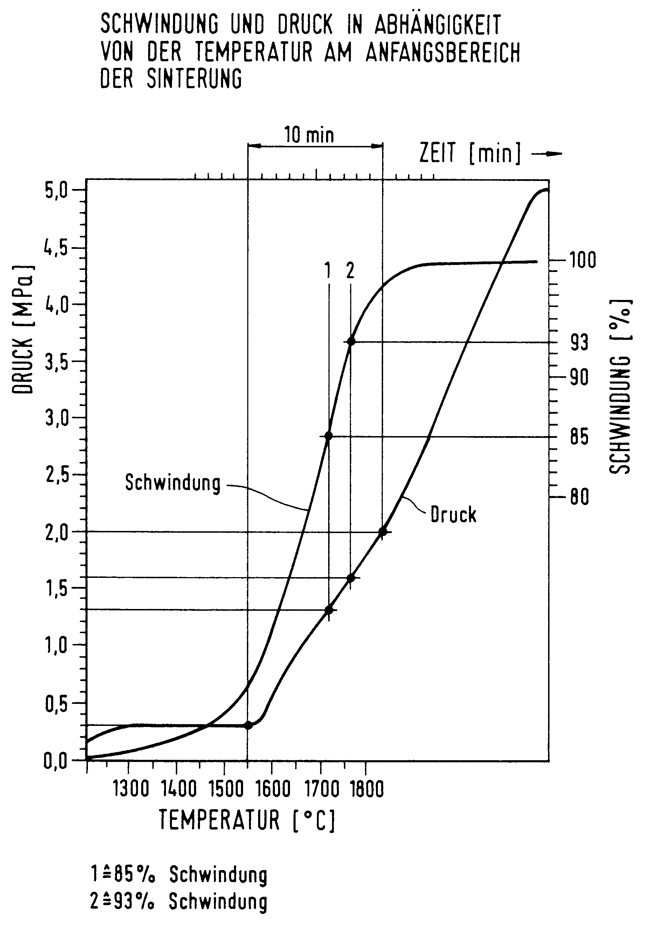

Die Ausgangsdichte betrug 1,83 g/cm$^3$, während die theoretische Dichte bei 3,30 g/cm$^3$ liegt. Dementsprechend erhält man für $(\Delta_l/L_o)_{85}$ = 13,3 % und für $(\Delta_l/L_o)_{93}$ = 15,8 %. Wie aus der **Abbildung 1** ersichtlich ist, beträgt der Stickstoffdruck bei 85 % theoretisch erreichbarer Maximaldichte 1,3 MPa (0,26 $P_{max}$) und bei 93 % theoretisch erreichbarer Maximaldichte 1,6 MPa (0,32 $P_{max}$). Die Porosität der Proben im gesintertem Zustand betrug weniger als 0,5 %. Die Probe war sowohl im Zentrum als auch im Randbereich hellgelb. Das Sinterprogramm erfüllt die Merkmale des Anspruchs 1.

Beispiele 5 bis 7

Ein Formkörper aus $Si_3N_4$-Pulver mit verschiedenen Gehalten an Sinteradditiven $Y_2O_3$ und $Al_2O_3$ wurde mit der Abmessung $30 \cdot 30 \cdot 60$ mm$^3$ hergestellt und im Drucksinterofen nach folgendem Programm gesintert:

Temperaturprogramm: Aufheizgeschwindigkeit 20 K/min bis 1800°C,
isotherme Haltezeit 1,5 h,
Abkühlgeschwindigkeit 20 K/min.
Druckprogramm: bis 1110°C Vakuum,
von 1110°C bis zum erreichen der isothermen Haltezeit bei 1850°C wird der Druck kontinuierlich auf 1,5 MPa Stickstoffdruck erhöht.
Bei Erreichen einer Temperatur von 1850°C wird der Stickstoffdruck innerhalb von 10 min auf 5,0 MPa erhöht und danach bis zur Abkühlung konstant gehalten.

Die Ergebnisse der Beispiele 5 bis 7 sind in der Tabelle 2 dargestellt. Die Porosität der Proben im gesintertem Zustand war kleiner als 0,5 %.

Tabelle 2

| Zusammensetzung der Proben und Ergebnisse der Drucksinterung (Beispiele 5 bis 7) | | | | | | | | | | |
|---|---|---|---|---|---|---|---|---|---|---|
| Beis. Nr. | Zusammensetzung | | | Aus-gangsdichte g/cm$^3$ | Temperatur bei der | | Druck bei | | Farbe | |
| | $Si_3N_4$ | $Y_2O_3$ % | $Al_2O_3$ | | 85% | 93 % | 85% | 93 %$D_{th}$ | Kern | Randzone |
| | | | | | $D_{th}$ erreicht wurden | | | | | |
| | | | | | °C | °C | MPa | MPa | | |
| 5 | 87,75 | 10 | 2,25 | 1,83 | 1730 | 1765 | 1,3 | 1,4 | hellgelb | hellgelb |
| 6 | 92 | 5 | 3 | 1,61 | 1750 | 1790 | 1,3 | 1,4 | grau | hellgrau |
| 7 | 93 | 5 | 2 | 1,61 | 1765 | 1820 | 1,3 | 1,4 | grau | hellgrau |

Beispiel 8 (Vergleichsbeispiel):

Ein Formkörper aus $Si_3N_4$-Pulver enthaltend 10 % $Y_2O_3$ und 2,25 % $Al_2O_3$ als Sinteradditive wurde mit der Abmessung $30 \cdot 30 \cdot 60$ mm$^3$ hergestellt und im Drucksinterofen nach folgendem Programm gesintert:

Temperaturprogramm: Aufheizgeschwindigkeit 30 K/min bis 1800°C,
isotherme Haltezeit 1,5 h,
Abkühlgeschwindigkeit 20 K/min.
Druckprogramm: bis 1200°C Vakuum,
von 1200°C bis zum Erreichen einer Temperatur
von 1675°C 0,3 MPa Stickstoffdruck.
Ab 1675°C wird der Stickstoffdruck innerhalb von 10 min auf 5,0 MPa erhöht und bis zur Abkühlung konstant gehalten.

Der Stickstoffdruck bei 85% von $D_{th}$ betrug 1,5 MPa (0,3 $P_{max}$) und bei 93 % von $D_{th}$ betrug er 2,2 MPa (0,44 $P_{max}$). Die Porosität der Proben in fertig gesintertem Zustand betrug 1,5 %. Das Sinterprogramm liegt außerhalb des Bereiches der Erfindung nach dem Patentanspruch und führt zu einer schlechteren Verdichtung.

**Patentansprüche**

1. Verfahren zum Drucksintern von Siliziumnitrid, bei dem Siliziumnitridpulver mit Sinteradditiven vermischt, zu Bauteilen verformt und dann nach einem Zweistufensinterprogramm dichtgesintert werden, wobei die Druckerhöhung des Stickstoffdruckes bei einer Dichte von > 95% der theoretisch erreichbaren Maximaldichte ($D_{th}$) auf einen Maximaldruck im Bereich von 1,7 bis 100 MPa erfolgt, dadurch gekennzeichnet, daß der Stickstoffdruck zum Zeitpunkt des Erreichens von 85% von $D_{th}$ im Bereich von 0,1 bis 0,3 des Maximaldruckes und zum Zeitpunkt des Erreichens von 93% von $D_{th}$ im Bereich von 0,2 bis 0,4 des Maximaldruckes eingestellt wird, wobei der Druck ab einer Temperatur von 1110 oder 1550 °C kontinuierlich bis zum Erreichen der isothermen Haltezeit erhöht wird.

2. Verfahren nach Anspruch 1, dadurch gekennzeichnet, daß die Sinteradditive wenigstens ein Oxid eines Metalles enthalten, ausgewählt aus der Gruppe Lithium, Magnesium, Aluminium, Kalzium, Yttrium, Strontium, Barium, Lanthan und den Lanthaniden.

3. Verfahren nach Anspruch 2, dadurch gekennzeichnet, daß die Sinteradditive eine Mischung von Aluminiumoxid und Yttriumoxid enthalten.

4. Verfahren nach Anspruch 1, dadurch gekennzeichnet, daß als Gas für die Druckerhöhung bis zum Erreichen einer Dichte von 93% von $D_{th}$ ein Stickstoffgas, eine Mischung aus Stickstoff und Wasserstoff, eine Mischung aus Stickstoff und Kohlenmonoxid oder eine Mischung aus Stickstoff, Wasserstoff und Kohlenmonoxid verwendet wird.

5. Verfahren nach Anspruch 1, dadurch gekennzeichnet, daß als Gas für die Druckerhöhung nach dem Erreichen einer Dichte von 95% von $D_{th}$ Stickstoff, Argon oder eine Mischung von diesen verwendet wird.

**Claims**

1. A process for pressure sintering of silicon nitride, in which silicon nitride powder is mixed with sintering aids, shaped to form components and then sintered to high density according to a two-stage sintering program, where the nitrogen pressure is increased at a density of > 95% of the theoretically achievable maximum density ($D_{th}$) to a maximum pressure in the range from 1.7 to 100 MPa, wherein the nitrogen pressure, at the point in time at which 85% of $D_{th}$ is reached, is set to from 0.1 to 0.3 times the maximum pressure and, at the point in time at which 93% of $D_{th}$ is reached, is set to from 0.2 to 0.4 times the maximum pressure, with the pressure being increased continuously from a temperature of 1110 or 1550°C upward until the isothermal hold time is reached.

2. The process as claimed in claim 1, wherein the sintering aids comprise at least one oxide of a metal selected from the group consisting of lithium, magnesium, aluminum, calcium, yttrium, strontium, barium, lanthanum and the lanthanides.

3. The process as claimed in claim 2, wherein the sintering aids comprise a mixture of aluminum oxide and yttrium oxide.

4. The process as claimed in claim 1, wherein the gas used for increasing the pressure until a density of 93% of $D_{th}$ is reached is a nitrogen gas, a mixture of nitrogen and hydrogen, a mixture of nitrogen and carbon monoxide or a mixture of nitrogen, hydrogen and carbon monoxide.

5. The process as claimed in claim 1, wherein the gas used for increasing the pressure after a density of 95% of $D_{th}$ is reached is nitrogen, argon or a mixture of these.

**Revendications**

1. Procédé de frittage sous pression du nitrure de silicium, dans lequel on mélange la poudre de nitrure de silicium avec des additifs de frittage, on moule pour obtenir des éléments de construction, puis on fritte pour obtenir des corps denses selon un programme de frittage en deux étapes, en augmentant la pression d'azote à une densité > 95% de la densité maximale théorique ($D_{th}$), à une pression maximale de 1,7 à 100 MPa, caractérisé en ce que la pression d'azote lorsqu'on atteint 85 % de $D_{th}$ se situe dans l'intervalle de 0,1 à 0,3 de la pression maximale et lorsqu'on atteint 93 % de $D_{th}$, dans l'intervalle de 0,2 à 0,4 de la pression maximale, en augmentant la pression à partir d'une température de 1100 ou 1550°C, en continue, jusqu'à ce qu'on atteint le temps de conservation isotherme.

2. Procédé selon la revendication 1, caractérisé en ce que les additifs de frittage contiennent au moins un oxyde d'un métal, pris dans le groupe comportant le lithium, le magnésium, l'aluminium, le calcium, l'yttrium, le strontium, le baryum, le lanthane et les lanthanides.

3.  Procédé selon la revendication 2, caractérisé en ce que les additifs de frittage contiennent un mélange d'oxyde d'aluminium et d'oxyde d'yttrium.

4.  Procédé selon la revendication 1, caractérisé en ce qu'on utilise en tant que gaz pour augmenter la pression jusqu'à l'obtention d'une densité de 93% de $D_{th}$, l'azote, un mélange d'azote et d'hydrogène, un mélange d'azote et de monoxyde de carbone ou un mélange d'azote, d'hydrogène et de monoxyde de carbone.

5.  Procédé selon la revendication 1, caractérisé en ce qu'on utilise en tant que gaz pour augmenter la pression, après avoir atteint une densité de 95% $D_{th}$, l'azote, l'argon ou leurs mélanges.

SCHWINDUNG UND DRUCK IN ABHÄNGIGKEIT
VON DER TEMPERATUR AM ANFANGSBEREICH
DER SINTERUNG

1 ≙ 85 % Schwindung
2 ≙ 93 % Schwindung